# EUROPEAN PATENT SPECIFICATION

(11) **EP 0 795 393 B1**
(45) Date of publication and mention of the grant of the patent: **16.07.2003**
(21) Application number: 96610031.5
(22) Date of filing: 06.09.1996
(51) Int. Cl.: B29C 65/18, B29C 65/74

(54) **Method for production of icecube bags**
Verfahren zur Herstellung von Eiswürfeltaschen
Procédé pour production des sacs de glacon

(30) Priority: 25.03.1996 DK 34396
(43) Date of publication of application: 17.09.1997
(73) Proprietor: SCHUR CONSUMER PRODUCTS A/S, 7100 Vejle (DK)
(72) Inventor: Vinkel, Erik Kyed, 7100 Vejle (DK); Erling Vangedal-Nielsen, 2950 Vedbaek (DK)
(74) Representative: Nielsen, Henrik Sten

(56) References cited:
- EP-A- 0 460 518
- WO-A-86/04561
- DK-A- 171 188
- GB-A- 2 266 267

## Description

The present invention generally relates to improved techniques for producing ice cube bags or similar bags composed of two or more thin plastic foils which are stamped or welded together.

From the early eighties there has been an appreciable market for the so-called ice cube bags, i.e. bags designed to be filled with water through an inlet opening so as to fill the interior of the ice cube bag which preferably has been divided into individual sections forming the individual ice cubes which, when the water has frozen, are taken out of the ice cube bag by tearing it apart.

In the production of ice cube bags of this type or similar bags it is generally known to produce the bags either by adhesive bonding or welding, optionally by a combined adhesive bonding and welding process, and the adhesive used may be a heat-activated adhesive. Furthermore, it is generally known that the stamping or welding of such thin foil bags necessitates the use of intermediate foils in order to prevent the heated stamping or welding dies providing the ice cube bags with stampings or weldings from heating through the thin foils. Such a technique is exemplified in German published patent specification no. 2623005 which disloses a technique making use of polyimide foils forming closed loops and constituting conveyors compressing the thin plastic foils to be welded between them, the polyimide foils partly acting as conveyors, partly as heat-transmitting foils. However, the prior art technique disclosed in the German published patent specification is not sufficiently refined to ensure that extremely thin plastic foils, such as LDPE or HDPE foils having a thickness of 10-50 µm, such as 15-35 µm, e.g. 16-25 µm, may be welded together in a safe and reliable manner, i.e. be provided with the appropriate weldings for dividing and joining the foils without the foils being partially deformed and stretched due to overheating of certain areas by the stamping or welding device, or the bag being deformed by stretching due to a mechanic impact on the foils.

Another commercially utilized prior art technique comprises the use of teflon webs placed between the lower surface of an upper stamping or welding device and the upper surface of the plastic foils to be welded together, and the upper surface of a lower stamping or welding device and the lower surface of the plastic foils, respectively. The commercially utilized prior art technique is further described in GB-A-2 266 267 and includes the steps according to the precharacterising part or the preamble of claim 1. The use of such teflon webs makes it possible to produce welded plastic bags, in particular ice cube bags, with great precision and reliability. However, the technique may still be further improved, as the known techniques impose limitations either on the production rate or on the utilization of the basic material, i.e. plastic foil.

The prior art production technique has thus been based on an intermittent process in which the plastic foils to be welded together are conveyed beneath the stamping or welding devices which are then brought together in order to compress and heat the plastic foils sandwiched between the teflon webs. However, the subsequent further conveyance of the plastic foils to allow new material to be fed to the stamping or welding devices imposes limitations on the prior art technique, either with respect to the production rate or to the utilization ratio of the plastic foils. Thus, in order to obtain a fast further conveyance from the stamping or welding devices it has proven necessary to provide the plastic foils with extensive non-heated areas serving as a support for the further conveyance of the plastic foils. Alternatively, if it was desired to provide a surface welding approaching 100% this involved a reduction of the production rate so as to allow the welded plastic foils to cool to a sufficiently low temperature to prevent the plastic foils from being stretched when conveyed from the stamping or welding devices.

It is an object of the present invention to provide an improved technique, both allowing a high production rate and a surface welding of the plastic foils approaching 100% and thus providing an approx. 100% utilization of the basic materials.

It is a further object of the present invention to provide a new and improved technique for producing ice cube bags or similar bags, the technique involving an intermittent or, alternatively, continuous production.

The above-mentioned objects, together with numerous other objects and advantages that will appear from the following detailed description of the presently preferred embodiments of the invention, are in accordance with a first aspect of the present invention achieved by a method for producing ice cube bags or similar bags, the method being characterized by the steps defined in the characterising part of claim 1.

In accordance with particular characteristics of the method according to the present invention there is provided a sandwich consisting of at least one web of high temperature resistant material such as teflon, preferably webs made of woven or non-woven teflon fibres or teflon threads, and layers consisting of two or more plastic foils from which the ice cube bags or similar bags are made. The sandwich is treated in a stamping or welding station, the web of high temperature resistant material serving two primary purposes: firstly, the purpose of constituting pressure and temperature transmitting webs and, secondly, the particularly characteristic purpose according to the invention of forming a mechanically supporting web being pressed down into and adhered to the plastic foils, the plastic foils having been softened by the application of heat and pressure and thus being exposed to deformation by stretching when applying mechanical forces to the plastic foils during their further conveyance from the stamping and welding station.

In accordance with the method of the present invention one or more webs of high temperature resistant material may be used, a first embodiment of the method according to the present invention comprising the use of only one web, the sandwich in step iii) being pressed against an abutment during the stamping or welding operation, and the stamping or welding devices being pressed against the web of high temperature resistant material from the side of the sandwich opposite the abutment. The abutment may be a stationary or mobile construction, e.g. an abutment plate which may be made of a high temperature resistant material or be supplied with a coating or a loose cloth or the like made of a high temperature resistant material such as PTFE or silicone rubber.

In accordance with the preferred embodiment of the method according to the present invention there are used two webs of a high temperature resistant material, the plastic foils in step ii) being inserted between the material and forming a sandwich, with the upper and lower layer consisting of the two webs of high temperature resistant material and the intermediary layer consisting of the plastic foils, the two webs of high temperature resistant material in step iii) being pressed down into and adhered to opposite sides of the plastic foils, the two webs of high temperature resistant material in step iv) being kept adhered to the opposite sides of the plastic foils for supporting the softened and at least partially melted plastic foils from opposite sides, and the two webs of high temperature resistant material in step v) being stripped off the plastic foils, either concomitantly or consecutively. The use of supporting webs of high temperature resistant material characteristic for the invention for mechanically supporting the softened and at least partially melted plastic foils during their conveyance from the stamping and welding station until the plastic foils have cooled to a sufficiently low temperature to prevent them from being deformed makes it possible to eliminate the above-mentioned limitations of the prior art regarding the production rate and utilization ratio of the plastic foil material, as the method according to the invention does not involve any limitations regarding the conveyance and conveyance rate of the plastic foils from the stamping and welding station and regarding the percentage of the plastic foil area which may be stamped or welded and thus is softened or even melted, avoiding the risk of stretching the softened and at least partially melted plastic foils during the conveyance.

To encourage cooling of the plastic foils and thus reduce the time elapsing from performing the stamping and welding operation in the stamping and welding station until the webs of high temperature resistant material are stripped off the exterior surfaces of the plastic foils the method may further comprise an active cooling of the plastic foils during conveyance of the sandwich from the stamping and welding station and prior to stripping the webs of high temperature resistant material off the exterior surfaces of the plastic foils. Further, it is noted that the stripping off of the webs of high temperature resistant material from the two exterior surfaces need not be carried out simultaneously, but may be performed so that the web adhering to one exterior surface, be it the upper or lower surface of the stamped and welded plastic foils, is stripped off before stripping off the web adhering to the opposite exterior surface.

In accordance with the purpose of the invention the method according to the invention may be carried out continuously or intermittently. A first advantageous embodiment of the method according to the present invention is characterized in that the sandwich is conveyed to and from the stamping and welding station continuously, and a second advantageous embodiment of the method according to the invention is characterized in that the sandwich is conveyed to and from the stamping and welding station intermittently, the stamping and welding operation being carried out while the sandwich is kept stationary in the stamping and welding station.

If the method is carried out in a continuous process according to the above mentioned first advantageous embodiment the stamping and welding devices in the stamping and welding station preferably comprise one or more rotating stamping or welding rollers, the stamping and welding devices preferably comprising two opposite and oppositely rotating stamping and welding rollers.

If the method according to the invention is an intermittent process in accordance with the above mentioned advantageous embodiment of the method according to the invention the stamping and welding devices may advantageously comprise a vertically movable stamping and welding plunger provided with a stamping and welding die the contours of which correspond to the intended stamped or welded areas of the finished ice cube bag or similar bag, the stamping and welding devices further comprising a stationary or vertically movable stamping and welding die being provided with contours mirroring the contours of the stamping and welding die of the vertically movable stamping and welding plunger.

The one or more webs characteristic of the invention may be supplied from respective rollers, thus providing endless webs or, alternatively, webs of a definite length which are replaced by a new web when used up, or, alternatively, are returend to a starting position. In the presently preferred embodiment of the method according to the invention the one or more webs of high temperature resistant material form closed loops which are conveyed by the plastic foils during conveyance of the sandwich to and from the stamping and welding station.

Thus, the closed loops form idler webs which are conveyed by the plastic foils, the webs alternatively being provided with conveyance means serving to at least partially convey the sandwich to and from the stamping and welding station. This embodiment, however, implies a very accurate control of the conveyance means conveying the webs, as a possible difference in velocity, particular a difference in acceleration between the webs of high temperature resistant material and the plastic foils, immediately will lead to a deformation, particularly a stretching, of the plastic foils, and thus unintentionally will damage the stamped or welded ice cube bags or similar bags.

In accordance with the method according to the present invention any material suitable for stamping or welding may be used, preferably plastic materials, particularly different og identical plastic foils such as plastic foils of polyolefines, preferably polyolefines such as polypropylene, polyvinylchloride, polyethylene, including LDPE or HDPE.

Depending on whether the finished product is a ice cube bag of the above mentioned knot-tying or the above mentioned self-closing type the plastic foils may have turned-in parts for providing closed compartments in self-closing type ice cube bags.

Plastic foils for use in accordance with the method according to the present invention may be homogeneous plastic foils or coextruded multi-layer plastic foils or e.g. aluminium surface coated plastic foils. Particularly on the mutually opposite surfaces the plastic foils may be provided with surface coatings of a melting material having a lower melting point than the support foil of the plastic foils.

In carrying out the method according to the present invention the stamping or welding production parameters will have to be adapted to the topical types of material. Particulary the stamping or welding temperatures and the stamping pressure has to be adapted to the materials used. Thus, in accordance with the invention the stamping pressure must be adapted to partly the material, partly the applied welding temperature so that the web or webs of high temperatur resistant material are pressed down into the plastic foils and adhered thereto in a manner characteristic for the invention in order to support the softened and at least partially melted plastic foils. The welding temperature used may vary according to the materials used and the applied stamping pressure, and in the presently preferred embodiment of the method according to the present invention the stamping or welding devices are heated to a temperature between 150 and 200°C, such as 160 and 190°C, such as 170°C in connection with LDPE foils and approx. 180-190°C in connection with HDPE foils. The corresponding stamping pressure is adjusted to meet the above mentioned demands regarding functionality regarding the support of the at least partially melted plastic foils by means of the web or webs of high temperature resistant material being characteristic for the method according to the present invention.

Furthermore, in a second aspect the present invention relates to an ice cube bag or similar bag produced by the method according to the first aspect of the invention and/or by using the production plant according to the second aspect of the invention.

In the following the invention will be further explained with reference to the drawing, wherein
fig. 1 is a schematic and partially sectional view of a first embodiment of a production plant according to the invention for producing ice cube bags in accordance with the method according to the present invention,
fig. 2a is a schematic, perspective and partially sectional view of a first section of the first embodiment of the production plant according to the invention shown in fig. 1 and comprising a foil supply station and a stamping and welding station,
fig. 2b is a schematic, perspective and partially sectional view of an alternative embodiment of the first section of the first embodiment of the production plant according to the invention shown in fig. 1 and comprising a foil supply station and a stamping and welding station,
fig. 3 is a schematic, perspective and partially sectional view of a first embodiment of a second section of the production plant shown in fig. 1 and comprising a separating station and a conveyor station,
fig. 4 is a schematic, perspectiv and partially sectional view corresponding to fig. 3 and showing a second embodiment of the second section of the production plant shown in fig. 1 and further comprising a cutting station upstreams of the separating station and the conveyor station,
fig. 5 is a schematic and perspective view of the actuating or drive mechanism of the production plant shown in figs. 1-4,
fig. 6a is a schematic, perspective and partially sectional view corresponding to figs. 2a and 2b, showing an alternative embodiment of the first section of a second embodiment of the production plant according to the invention and comprising two foil supply stations, a stamping and welding station and a separating station,
fig. 6b is a schematic, perspective and partially sectional view corresponding to figs. 2a, 2b and 6a, showing an alternative embodiment of the first section modified in relation to the second embodiment of the production plant according to the invention shown in fig. 6a and comprising two foil supply stations and a stamping and welding station, and
figs. 7a-7d show different embodiments of ice cube bags which may be produced in the production plant shown in figs. 1-5 or alternatively in the production plant shown in figs. 6a and 6b in accordance with the method according to the present invention.

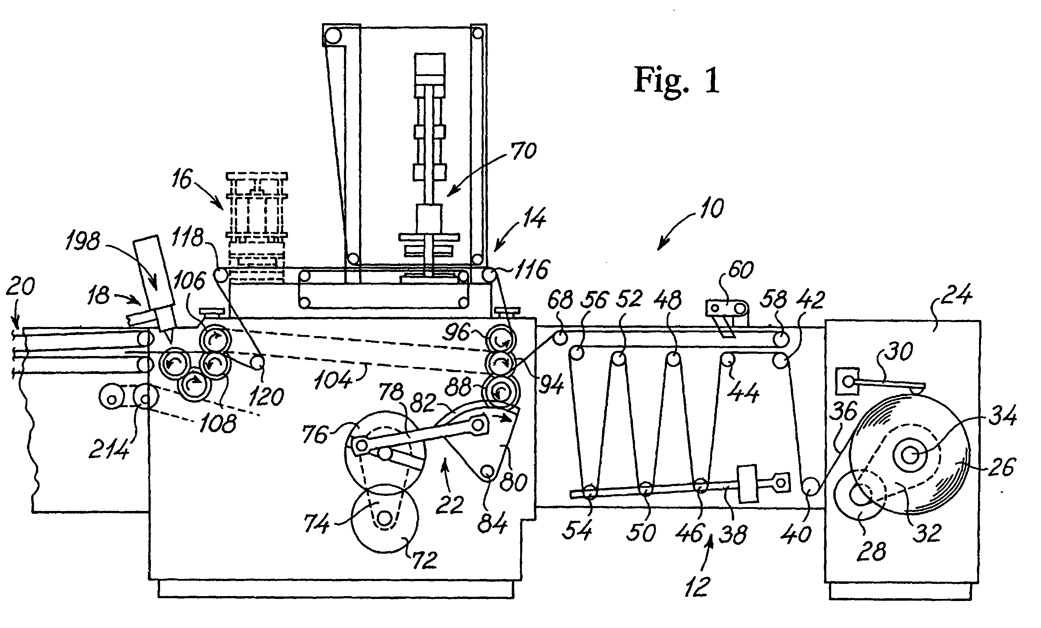

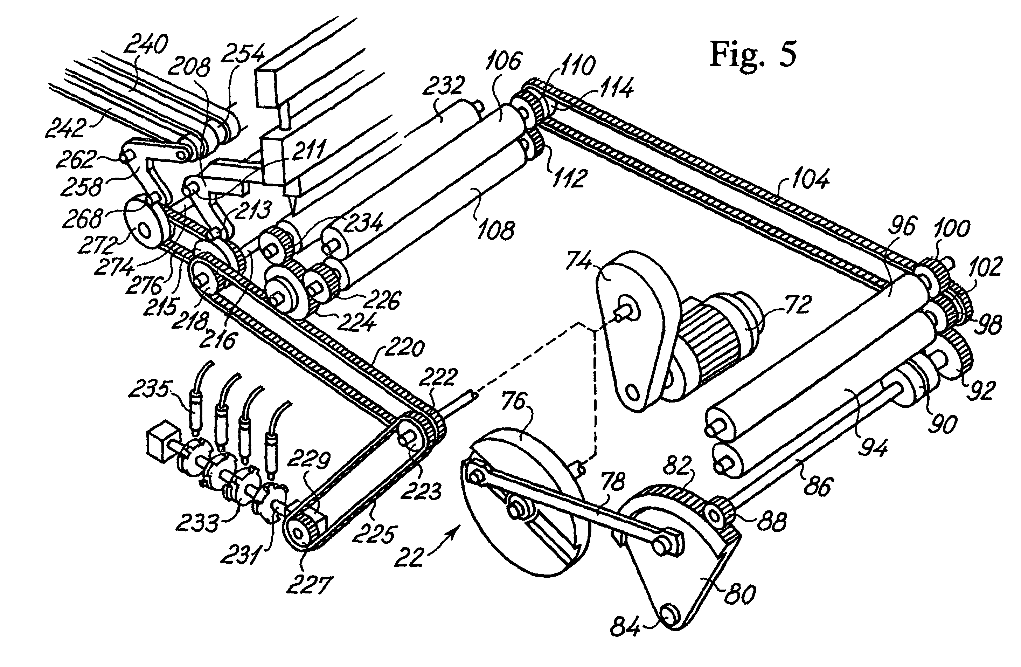

Fig. 1 is a schematic view of a first and presently preferred embodiment of a production plant 10 according to the invention for producing ice cube bags or similar welded bags in an intermittent production process. The production plant 10 comprises a number of individual stations: a foil unrolling station 12, a stamping and welding station 14, a cutting and separating station 18 and a conveyor station 20. As will appear from the following description, dependent on the product in question, the production plant may also comprise a further cutting station 16 which will be detailed below together with the other stations. Reference numeral 22 in fig. 1 indicates conveyance means detailed in fig. 5 and providing a continuous conveyance of the foil webs supplied from the foil unrolling station 12 to the stamping and welding station 14, the optional further cutting station 16, the cutting and separating station 18 and finally the conveyor station 20.

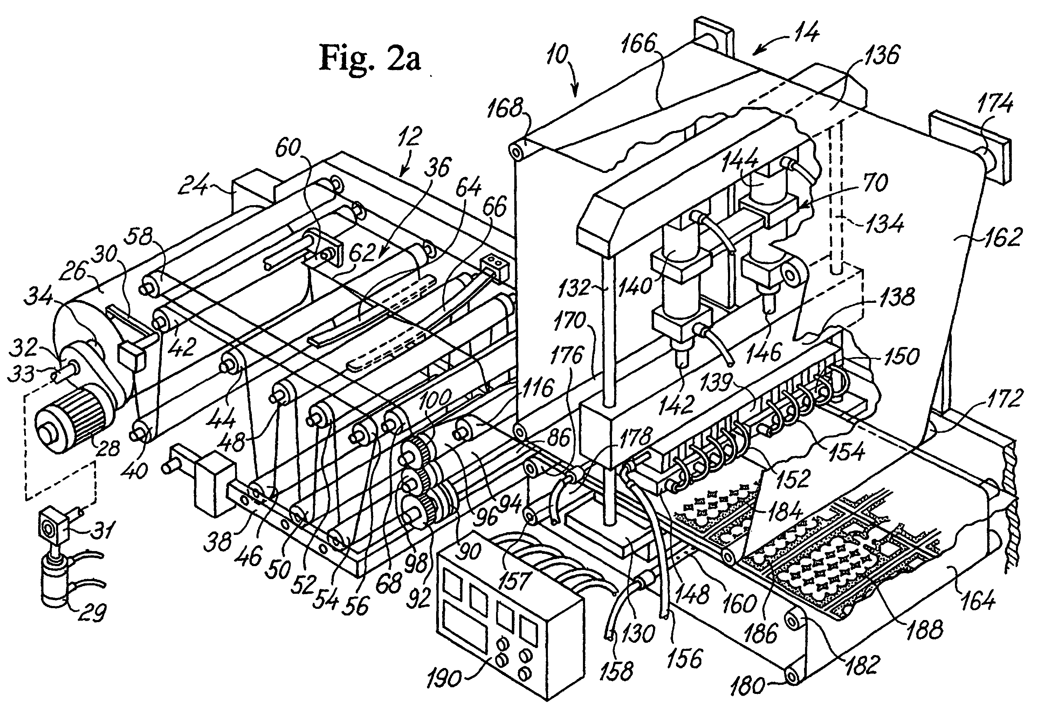

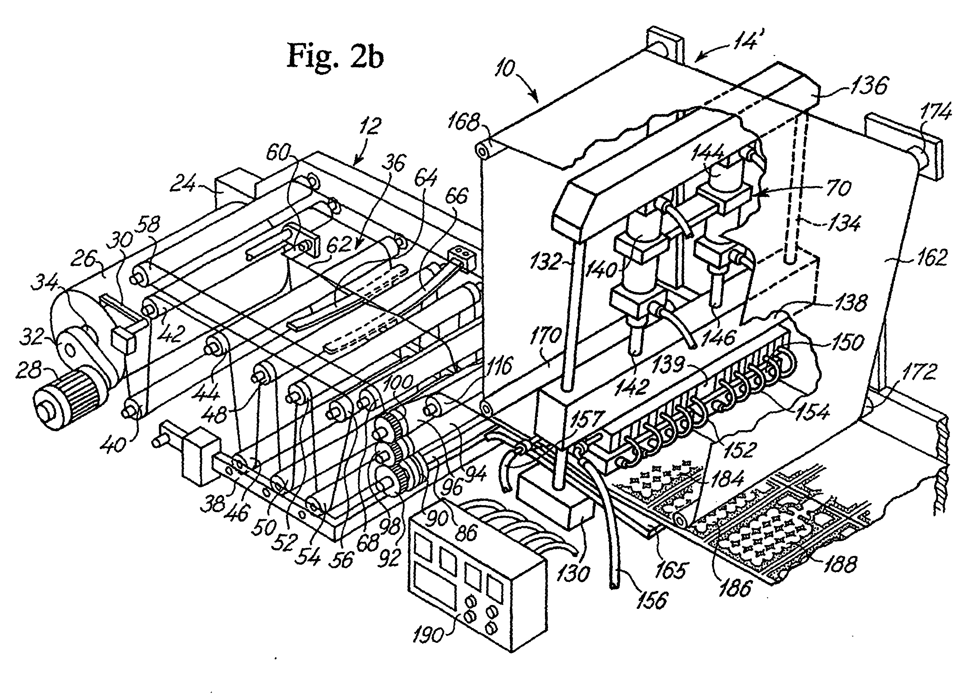

The foil unrolling station 12, also shown in figs. 2a and 2b, and the entire production plant 10 comprises a frame 24 rotatingly supporting a roll 26 of a two-layer foil, preferably an LDPE foil. The roll 26 is kept in a substantially continuous rotation by a motor 28 providing a continuous or discontinuous unrolling of the two-layer foil from the roll 26 at a rate averaging the total foil passage rate through the stamping and welding station 14 of the production plant. To ensure that the two-layer foil supplied from the roll 26 moves through the foil unrolling station 12 as intended there is provided a foil edge detecting arm 30 communicating with a central control unit in the production plant, the central control unit being contained within a housing 190 which will be detailed below together with the central control unit. The central control unit communicates with and controls a compressed air cylinder 29 which in turn supports a support block 31 supporting a shaft 33. The shaft 33 constitutes a continuous shaft or shaft extension supporting a hollow cylindrical shaft 34, the hollow cylindrical shaft 34 supporting the roll 26. The motor 28, which implements the unrolling of the two-layer foil from the roll 26, is coupled to the shaft 34 through an exchange 32. When the above mentioned foil edge detector 30 detects a transverse movement of the foil supplied from the roll 26 relative to the intended movement in relation to the foil unrolling station 12, the compressed air cylinder 29 is actuated and elevates or lowers the shaft 33, thus compensating for the biased unrolling of the two-layer foil from the roll 26.

Due to the inertia of the very large roll 26 the two-layer foil 36 supplied from roll 26 and forming a two-layer foil web can only be unrolled at a slowly varying rate, and therefore the continuous unrolling of the two-layer foil or web 36 from the roll 26 or the unrolling of the two-layer foil 36 from the roll 26 at a slowly varying rate has to be converted to a stepwise conveyance of the two-layer foil web 36 through the stamping and welding station 14. This speed conversion is implemented in a section in the foil unrolling station 12 whrein the two-layer foil web 36 is moved around a number of rollers and is furthermore subjected to mechanical processing, viz. longitudinal cutting and separation. First the two-layer foil web 36 is moved underneath a stationary roller 40 and then upwards around two stationary rollers 42 and 44 and therefrom in a zig-zagging path downwards about a roller 46 supported on an adjustable arm 38. From the roller 46 the two-layer foil web 36 is moved upwards around a stationary roller 48 and further downwards around a roller 50 supported on the adjustable arm 38. From the roller 50 the two-layer foil web 36 is moved upwards around a stationary roller 52 corresponding to the rollers 42, 44 and 48 and further downwards around a third roller 54 supported on the adjustable arm 38 and therefrom upwards around a stationary roller 56. As will appear from figs. 1 and 2a and the above explanation the two-layer foil web 36 on its way from the roller 44 to the roller 56 forms a total of six essentially vertical lanes constituting the above mentioned zig-zagging path which serves to neutralize the variations in speed and length the two-layer foil web 36 is subjected to when unrolled from roll 26 and stepwise conveyed through the stamping and welding station 14. From the roll 26 the two-layer foil web 36 is moved back around a stationary roller 58, wherefrom it is supplied stepwise in an essentially horizontal direction and conveyed through the stamping and welding station 14.

Downstreams of the roller 58 the two-layer foil web 36 moves past a knife 60 mounted stationary in frame 24 and serving to divide the two-layer foil webs 36 into two narrower two-layer foil webs with dimensions corresponding to those of the ice cube bags produced in the production plant 10. The knife 60 provides the two-layer foil web 36 with a cut 62 as shown in fig. 2, and after cutting the foil web 36 into two narrower two-layer foil webs the individual layers of the two two-layer foil webs are separated by two arms 64 and 65 mounted in the frame 24 and extending between the two layers in each of the two narrower two-layer foil webs into which the foil web 36 has been cut or divided after having passed the knife 60. From the above mentioned section of the foil unrolling station 12 the two two-layer foils having separated layers are supplied to the stamping and welding station 14 from a stationary roller 68.

The actual production of the ice cube bags in the stamping and welding station 14 comprises a single stamping and welding operation in which the ice cube bags are produced from the two narrower two-layer foil webs obtained by cutting the foil web 36 with a knife 60, thus producing two ice cube bags from the narrow two-layer foil webs in a single stamping and welding operation. The stamping and welding operation performed in the stamping and welding station 14 is carried out discontinuously or intermittently, the foil webs being conveyed stepwise to a stamping and welding device 70, the stamping and welding operation being performed with the two two-layer foil webs being kept in a stationary position beneath the stamping and welding device 70. The stepwise conveyance of the two two-layer foil webs is achieved by means of rollers or rollers actuated by a toothed wheel and belt arrangement as shown more detailed in fig. 5.

The intermittent conveyance of the two narrower two-layer foil webs through the stamping and welding station 14 is achieved by a motor 72 actuating a flywheeel 76 through a gear or exchange 74. The flywheel 76 is coupled to a toothed wheel segment 80 through a connecting rod 78, the toothed wheel segment being an essentially triangular plate 80 provided with a circular peripheral toothing 82 and supported on a rotational axis 84. When rotated by the motor 72 through the exchange 74 and connecting rod 78 the toothed wheel segment 80 rotates forth and back between two extreme positions. The rotation of the toothed wheel segment 80 is transferred to a shaft 86 through a toothed wheel 88, the shaft 86 constituting the driving shaft for the intermittent conveyance of the above mentioned two two-layer foil webs through the stamping and welding station 14. Through an electrically controlled coupling and brake arrangement 90 shown in fig. 5 the shaft 86 is coupled to a toothed driving wheel 92, transferring in the direction of the arrow shown in fig. 1 the revolution of the toothed wheel segment 80 to a number of actuating rollers 94 and 96 designed to receive the two narrower two-layer foil webs from the supply roller 68, moving the two two-layer foil webs through the stamping and welding station 14 and past the stamping and welding device 70.

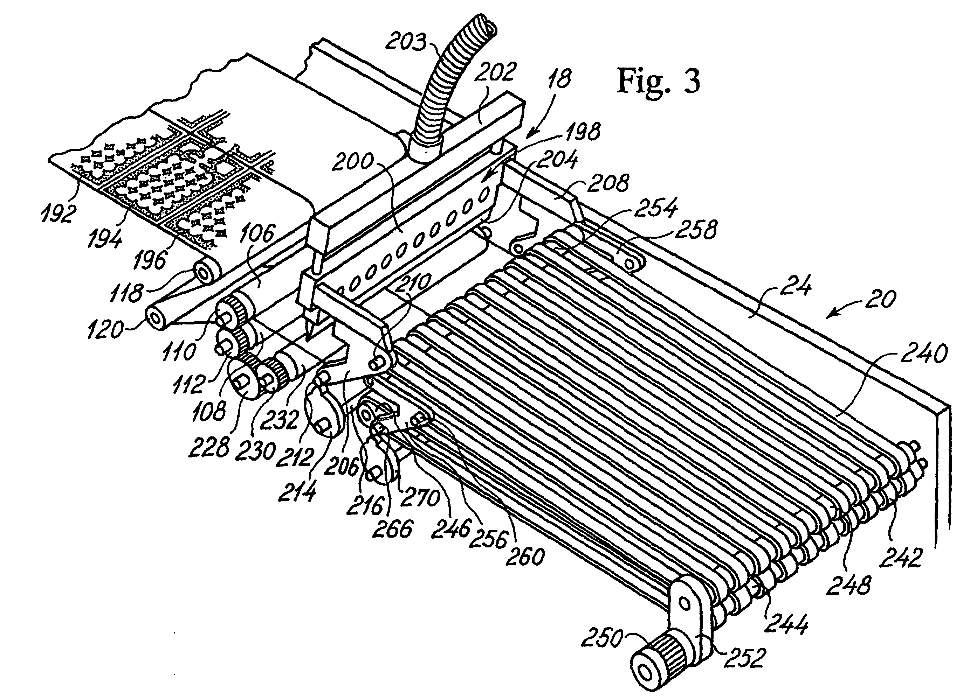

As shown in fig. 5 the actuating rollers 94 and 96 are coupled to the toothed driving wheel 92 through respective toothed wheels 98 and 100, the shaft supporting the actuating roller 94 also being provided with a driving wheel cooperating with a toothed belt 104 which in turn is designed to actuate two actuating rollers 106 and 108 picking up the two two-layer foil webs after their release from the stamping and welding device 70, i.e. after completion of the stamping and welding operation in the stamping and welding station 14. The actuating rollers 106 and 108 are provided with cooperative toothed wheels 110 and 112, respectively, the shaft supporting the actuating roller 106 further being provided with a driving wheel cooperating with the toothed belt 104. The rotational direction of the actuating rollers 94, 96, 106 and 108 as well as a number of further actuating rollers, the function of which will be detailed in the following, is shown by the arrows in fig. 1, the arrows indicating the rotational direction of the topical roller during the intermittent conveyance of the two two-layer foil webs through the stamping and welding station 14. Apart from the actuating rollers 94, 96, 106 and 108 the stamping and welding station 14 comprises a number of idler rollers 116, 118 and 120, the rollers 116 and 188 being designed to achieve a substantially horizontal conveyance of the two two-layer foil webs are conveyed in during the stamping and welding operation carried out by the stamping and welding device 70, and the roller 120 being an adjustable roller to determine the distance travelled by the two two-layer foil webs between the between the stamping and welding device 70 and the cutting station 18, thus adjusting the position in which the cutting station 18 is to cut the welded two-layer foil webs into individual ice cube bags, as will be detailed below with reference to fig. 3.

As shown in fig. 2a the stamping and welding device 70 comprises a lower support plate 130 provided with two vertical, upwardly extending rods 132 and 134 which in turn are connected through a top bar 136 and a cross member 138 which together with the support plate 130 keep the rods 132, 134 in a vertical and mutually parallel position. The cross member 138 supports two sets of actuating cylinders 140, 141 and 144, 145 which are actuated through pressure fluid inlet hoses connected thereto and preferably are in the form of pressure air cylinders. The two sets of actuating cylinders 140, 141 and 144, 145 are designed to position the stamping and welding devices in a two-step process. In the first step the stamping and welding dies 148 and 150 comprised in the heated stamping and welding devices remain elevated in a starting position at a maximal distance above the two-layer foil webs being passed through the stamping and welding station to prevent the foil material from being melted by the heat radiating from the stamping and welding devices, and in the second step the stamping and welding dies 148 and 150 are moved from their elevated position at a certain distance above the two-layer foil web to a working position in which they and pressed down into the two-layer foil web as described below by actuating the actuating cylinders 141 and 145. Thus, the two actuating cylinders 140 and 144 are designed to position the stamping and welding dies in either the starting or working position, and by actuating the actuating cylinders 141 and 145 the stamping and welding dies are lowered towards the two-layer foil webs. The stamping and welding dies 148 and 150 are provided with lower surfaces comprising protruding, i.e. downwardly projecting prominences corresponding to the desired stampings and weldings in the ice cube bags being stamped and welded by means of the stamping and welding device 70 in the stamping and welding station 14.

The stamping and welding dies 148 and 150 are electrically heated and comprise therefore a number of electric heating units supplied by a number of connection cords, two of which have been assigned reference numerals 152 and 154, respectively. As will be obvious for the skilled person, the stamping and welding dies 148 and 150 are thermoregulated, i.e. the stamping and welding dies are kept at a well-defined temperature by means of a thermostat. The suspensions of the stamping and welding dies are cooled by water supplied and removed through cooling water inlet and outlet hoses 156 and 157, respectively. Further to the water cooling arrangement for cooling the suspension of the stamping and welding dies 148 and 150 the production plant shown in fig. 2a is provided with a cooling air hose 158 mounted at and - seen in the direction of conveyance of the two-layer foil web - downstreams of the complementary stamping and welding dies, the cooling air hose providing cooling air supplied from a number of air supply apertures in a air supply tube 160.

As will appear from figs. 1 and 2a the two two-layer foil webs are inserted below the vertically mobile stamping and welding dies 148 and 150, which, however, are not brought in direct contact with the surfaces of the two two-layer foil webs, or two high temperature resistant heat transmission foils 162 and 164are inserted between the upper surface of the two two-layer foil webs and the lower surface of the stamping and welding dies 148 and 150, and the lower surface of the two two-layer foils and a foil in the form of a silicone rubber sheet resiliantly supported on the support plate 130, respectively, the heat transmission foils 162 and 164 forming closed, loop-shaped webs. Reference numeral 116 in fig. 2a schematically indicates the joining in the heat transmission foil 162 providing an upper closed, web-shaped loop. The corresponding high temperature resistant heat transmission foil 164 is also provided with a joining, which, however, is not shown in the drawing. The upper closed loop formed by the heat transmission foil 162 is provided by a total of four idler rollers 168, 170, 172 and 174, and correspondigly the closed loop formed by the high temperature resistant heat transmission foil 164 is provided by four idler rollers 176, 178, 180 and 182.

The stamping and welding station 14 is controlled by the central control unit contained in the housing 190 which further contains regulators for adjusting the temperature of the heating units in the stamping and welding dies, e.g. the stamping and welding dies 148 and 150, the pressure air supply volume, etc. In the stamping and welding station 14 the two two-layer foil webs are conveyed one step by the conveyance means 22 described above in connection with figs. 1 and 5, whereafter the stamping and welding dies actuated by the actuating cylinders 140 and 144 and 148 and 150 are lowered onto the two two-layer foil webs supported on the support plate 130 simultaneously with keeping the two two-layer foil webs in a stationary position, the two two-layer foil webs which previously have been separated from each other in their initially absolutely airtight layered position being pressed against each other between the two high temperature resistant heat transmitting foils 162 and 164. The high temperature resistant heat transmitting foils which preferably are woven PTFE foils are designed to transmit heat to the upper and lower surfaces of the two two-layer foil webs during the stamping and welding process in order to provide the two two-layer foil webs with stampings and weldings corresponding to the stampings provided on the stamping dies without resulting in weak stampings and weldings and without cutting through the foils due to excessive local heating of a given area.

By pressing together the sandwich consisting of the two PTFE webs 162 and 164 and the two intermediary two-layer foil webs produced from the two-layer foil web 36 the woven PTFE webs are pressed down and melted down into the melted two-layer foil webs, thus adhering the woven PTFE webs 162 and 164 to the partially melted, pressed and welded two-layer foil webs. Surprisingly and importantly, due to the pressing operation adhering the woven PTFE webs 162 and 164 to the stamped and welded two-layer foil webs the two-layer foil webs will not be deformed in the following step, wherein, after elevating the stamping and welding dies 148 and 150, the conveyance means shown in fig. 5 will convey the two-layer foil webs a distance exactly corresponding to the width of the stamped and welded ice cube bags.

It should be noted that the above mentioned electrially controlled, combined gear and brake 90 is controlled in such a way that a half revolution of the flywheel 76, transferred by the toothing 82 of the triangular plate 80, results in a conveyance of the two-layer foil webs through the stamping and welding station 14, whereas the following half revolution of the flywheel 76 when actuating the electrically controlled, combined gear and brake in order to lock the brake is not transferred to the actuating rollers 94, 96 and 106 and 108, with the result that the two-layer foil webs are kept stationary in the stamping and welding station 14 so that the stamping and welding device 70 described above with reference to figs. 1 and 2a can perform the above mentioned stamping and welding operation. Thus, fig. 2a is a schematic view of a situation where the two two-layer foil webs are moving from a completed stamping and welding operation which has resulted in an ice cube bag 184, and fig. 2a shows two additional ice cube bags 186 and 188 produced in the two previous stamping and welding steps.

When conveying the stamped and welded ice cube bags, e.g. the ice cube bags 184, 186 and 188, the woven PTFE webs 162 and 164 support the melted and softened foil material adhering to the surfaces of the woven PTFE webs, the cooling air supplied from the air supply tube 160 cooling the heated foil webs and causing the partially melted foil material in the stampings and weldings of the ice cube bags to solidify. After conveying the two two-layer foil webs one further step from the stamping and welding operation the upper woven PTFE web 162 is stripped from the upper surface of the welded ice cube bags, e.g. ice cube bag 186, whereas the lower woven PTFE web 164 is not stripped from the welded two-layer foil webs, i.e. the completed ice cube bags, e.g. ice cube bag 188, before the implementation of a further step. This ensures that the stamped and welded ice cube bags are not left unsupported before the implementation of two steps and after the foil material has cooled to a sufficiently low temperature, so that the pull applied to the welded ice cube bags by the actuating rollers 106 and 108 during conveyance of the two two-layer foil webs does not result in an elongation and thus a deformation of the stamped and welded ice cube bags.

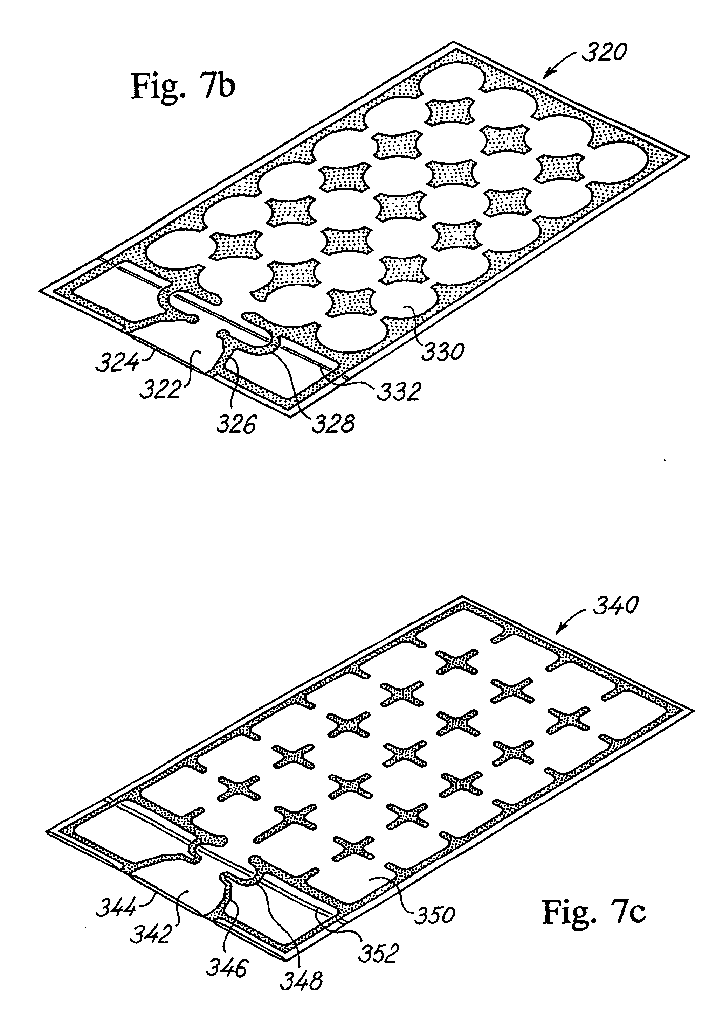

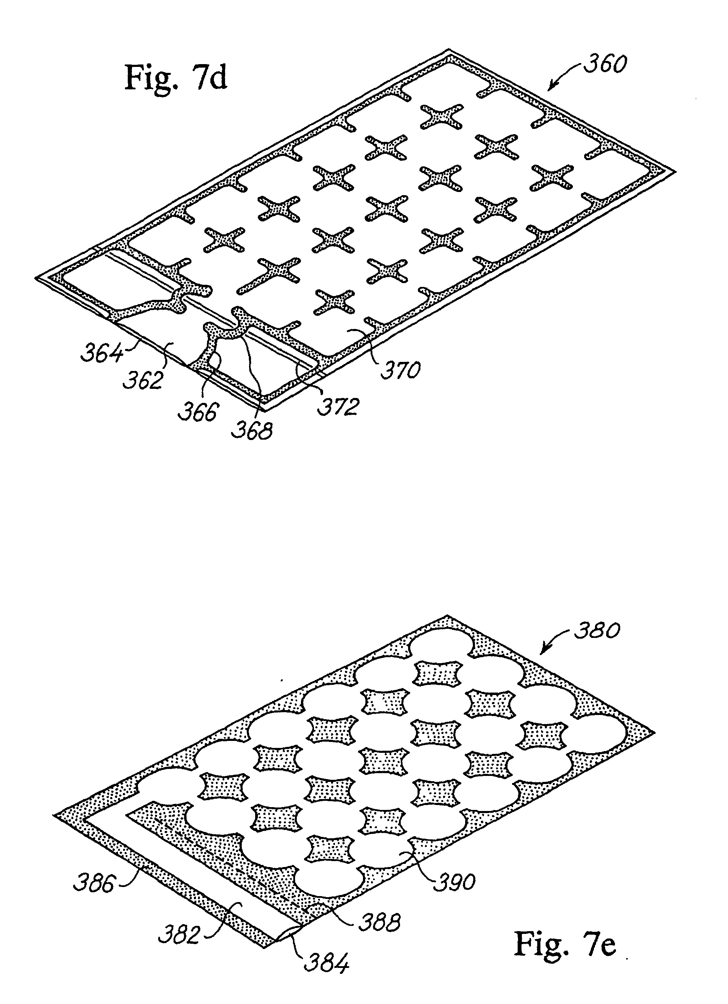

It is noted that the ice cube bags 184, 186 and 188 shown in fig. 2a correspond to the embodiment of the bags comprised by applicant's Danish design application no. 0818 1993, being a so-called self-dosing ice cube bag, which will also be described below with reference to figs. 7b, 7c and 7d, but show the technical characteristics described in applicant's Danish utility model registration no. 92 00011 and applicant's Danish patent no. 0,574,496.

After releasing the lower woven PTFE web 164 from the lower surface of the ice cube bag 188 and the adjacent ice cube bag produced from the second two-layer foil web the stamped and welded ice cube bags are in three further steps conveyed to the roller 118 and the idler roller 120 as shown in fig. 3, whereafter the stamped and welded two-layer foils by the rollers 106 and 108 are conveyed to the cutting and separating station 18 and further to the conveyor station 20.

Fig. 2b shows a stamping and welding station 14' being a modification of the stamping and welding station 14 shown in fig. 2a and differing from the above mentioned stamping and welding station 14 in that the above mentioned lower PTFE web 164 has been eliminated and replaced by a support plate 165 mounted on the support plade 130 and providing an enlargement of the support surface compared to the support plate 130, the support surface supporting a yielding foil in the form a silicone rubber sheet as described above. The support plate 165 is preferably mounted parallel to the two two-layer foil webs, but may alternatively, as shown in fig. 2b, be mounted in a forwardly and downwardly biased position in the direction of conveyance of the two two-layer foil webs, the biased position of the support plate 165 being exaggerated in fig. 2b. In the stamping and welding station 14' the stamping and welding device 70 is mounted perpendicularly to the support plate 165 and is thus positioned sloping forwardly in the direction of conveyance of the two two-layer foil webs. Alternatively and preferably, the stamping and welding device 70, corresponding to a position on the support plate 165 parallel to the two two-layer foil webs, is mounted perpendicular to the two two-layer foil webs. The slope of the support plate 165 ensures that the two welded two-layer foil webs do not adhere to the supporting, yielding foil, and if a partial, local adherance to the yielding sheet should occur, the welded two-layer foil webs are stripped off at an angle of less than 180) in relation to the yielding foil sheet in order to prevent that the welded two-layer foil webs are subjected to excessive pulling forces which might result in a permanent deformation of the partially softened areas of the plastic foil webs.

As shown in figs. 1 and 3 the cutting station 18 is provided with a cutting device 198 consisting of a bar 200 with a knife edge 204 protruding downwardly from its lower surface, and a suction box 202 connected with a suction hose 203 being mounted above the bar. The bar 200 is mounted at one end of the essentially L-shaped suspension angles 206 and 208, each of which being provided with an axle journal positioned in the centre of the L-shaped suspension angles. Fig. 3 only shows an axle journal 210 on the suspension angle 206, the corresponding axle journal on the suspension angle 208 being hidden in fig. 3, but being shown in fig. 5 where it has been assigned reference numeral 211. At the end of the second leg of the suspension angles 206 and 208, seen in relation to the mounted bar 200, the suspension angles are provided with an outwardly protruding dowel cooperating with a cam on a cam wheel 214. Fig. 3 only shows a dowel 212 on the suspension angle 206, the corresponding dowel on the suspension angle 208 being hidden in fig. 3, but being shown in fig. 5 where it has been assigned reference numeral 213. The cam wheel 214 is supported at one end of a shaft 216 and is through a toothed belt wheel 218 and a toothed belt 220 mounted on the shaft 216 connected with a toothed belt wheel 222 which in turn is coupled to a toothed wheel mounted on the shaft exiting from the exchange or gear 74, the toothed wheel thus being actuated continuously together with the flywheel 76 to provide a continuous rotation of the shaft 216. As shown in fig. 5, an eccentric wheel 215 cooperating with the cam 213 is mounted at the opposite end of the shaft 216. It it noted that the gearing accomplished by the toothed wheel and toothed belt 220 is coordinated so that one revolution of the shaft exiting from the gear or exchange 74 results in one revolution of the shaft 216.

As shown in fig. 5 a toothed wheel 223 is mounted on the shaft exiting from the exchange or gear 74, the toothed wheel actuating a toothed belt 225 coupled to a toothed wheel 227 which in turn actuates a worm gearing 229. The worm gearing 229 is connected with a shaft 231 on which there is mounted a number of encoder discs (one of which has been assigned reference numeral 233) cooperating with respective encoders or detectors, the encoder cooperating with the encoder disc 233 having been assigned reference numeral 235. The encoder discs and encoders cooperate in turn with the above mentioned central control unit contained in the housing 190 to provide control signal for controlling the above mentioned devices corresponding to the angle position of the shaft exiting from the exchange or gear 74 or, correspondingly, the angle position of the flywheel 76.

As shown in fig. 3 a toothed wheel 228 corresponding to the toothed wheel 224 is mounted on the opposite side of the production plant, the toothed wheel 228 serving the same purpose as the toothed wheel 224, viz. the purpose of transferring the rotation of the actuating roller 108 to a contact roller 232, the shaft of which, as shown in fig. 3, being provided with a toothed wheel 230 mounted at one of its ends and cooperating with the toothed wheel 228, and the opposite end of the shaft being provided with a toothed wheel 224 cooperating with the toothed wheel 234. The the contact roller 232 supports the stamped and welded two-layer foil webs forming the interconnected ice cube bags, e.g. ice cube bags 192, 194 and 196 shown in fig. 3, when released from the actuating rollers 106 and 108. During the conveyance of the stamped and welded two-layer foil webs the cutting device 198 is elevated by the cooperation of the cam wheel 214 with the cam 212, and by the cooperation of the eccentric wheel 215 with the cam 213, but at the time the welded two-layer foil webs have been conveyed underneath the cutting device 198 and a non-welded area between two sets of adjacent ice cube bags has been positioned beneath the cutting device 198 the cutting device is released from its elevated position and moves down towards the contact roller 232, thus cutting off of the two outermost ice cube bags from the two continuous two-layer foil webs forming the interconnected ice cube bags, e.g. the ice cube bags 192, 194 and 196 shown in fig. 3. The cut office cube bags which have been separated from the two continuous two-layer foil webs shown at the upper left corner of fig. 3 are transferred to the conveyor station 20 shown in figs. 1 and 3, which is designed to transfer the finished stamped and welded, individually cut-off ice cube bags from the production plant shown in figs. 1-3 of the drawing and to a packing unit.

The conveyor station 20 is provided with two sets of conveyor belts placed one above the other, more particularly ten upper belts, one of which has been assigned the reference numberal 240, and correspondingly ten lower belts, one of which has been assigned the reference numeral 242. The lower belts, exemplified by belt 242, extend between a driving shaft 244 and a secondary shaft 246 both being stationary in relation to the frame 24 of the production plant, and the upper conveyor belts, exemplified by conveyor belt 240, extend between a driving shaft 248 mounted above a driving shaft 244 and, similar to the driving shaft 248, being stationary in relation to the frame 24 and being actuated by a single motor 250 through an exchange or gear 252, and a secondary shaft 254 being movable in relation to the frame 24 and being mounted on two L-shaped suspension angles 256 and 258 having essentially the shape of the above mentioned L-shaped suspension angles 206 and 208 bearing the bar 200 of the cutting device 198. As shown in figs. 3 and 5 the L-shaped suspension angles 256 and 258 are mounted on axle journals 260 and 262, respectively, and have been provided with dowels 266 and 268, respectively, corresponding to the dowels 212 and 213 of the suspension angles 206 and 208, the dowels 266 and 268 cooperating with a cam wheel 270 shown in fig 3 and corresponding to cam wheel 214, and with an eccentric wheel shown in fig. 5 and corresponding to the eccentric wheel 215.

The conveyor belts 240 and 242 are conveyed at a rate considerably exceeding that of the finished ice cube bags, e.g. the ice cube bags 192, 194 and 196 shown in fig. 3, and when conveying two finished stamped and welded ice cube bags past the cutting device 198 the former are separaed from each other, the secondary shaft 254 being elevated in relation to the stationary secondary shaft 252 due to the cooperation of the dowels 266 and 268 with the cam wheel 270 and the eccentric wheel 270, so that the two finished ice cube bags which are still connected with the two stamped and welded two-layer foil webs, can freely be inserted between the belts exemplified by belts 240 and 242. Immediately after the cutting device 298 has been lowered onto the contact roller 232 and has cut off the two finished ice cube bags from the two stamped and welded two-layer foil webs, the upper belts, exemplified by belt 240, are also lowered onto the lower belts, exemplified by belt 242, and consequently grip the cut-off finished ice cube bags and convey them at a high rate between the upper and lower belts, exemplified by belts 240 and 242, and to a packing unit. The delay between the lowering of the secondary shaft 254 and the lowering of the cutting device 198 is accomplished by a small angular displacement of the cam on the cam wheel 270 in relation to the cam on the cam wheel 214. As shown in figs. 3 and 5 the cam wheel 270 and the eccentric wheel 272 are supported on the same shaft 274 and are actuated by a toothed belt 276 cooperating with a toothed belt wheel on the shaft 216 bearing the cam wheel 214 and the eccentric wheel 215. The shafts 274 and 216 are thus actuated at the same rate of revolution, which results in a synchroneous elevation and lowering of the cutting device 198 and the upper conveyor belts, exemplified by conveyor belt 240, in relation to the lower conveyor belts, exemplified by conveyor belt 242.

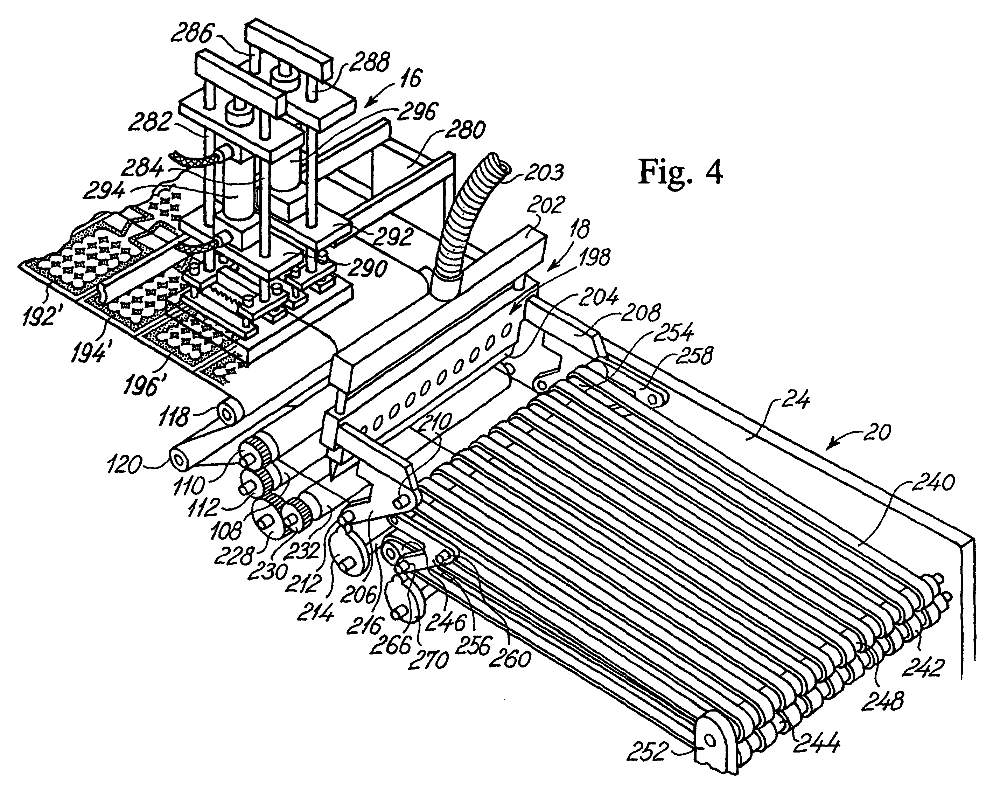

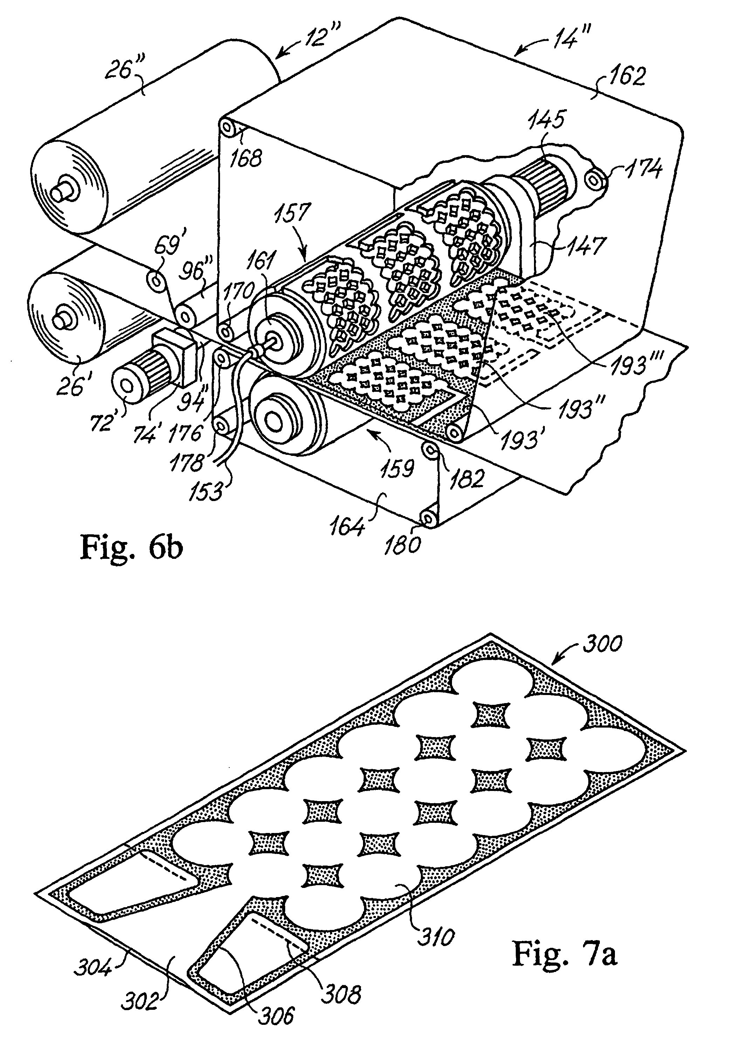

The above described production plant can be used for producing ice cube bags or similar foil bags of any shape in one or more layers, and fig. 4 shows a modified embodiment of the production plant comprising the cutting station 16 indicated by a dotted line in fig. 1, wherein the welded ice cube bags are cut in a longitudinal direction in relation to the moving direction of the continuous two-layer foil webs, the ice cube bags 192', 194' and 196' shown in fig. 4, similar to the ice cube bags 192, 194 and 196 in fig. 3, corresponding to applicant's older Danish design registration 0200 1979, more particularly a so-called knot-tying bag, which will also be described in detail below with reference to fig. 7a. The knot-tying bag differs from the selv-closing ice cube bag shown in fig. 3 by being provided with two cuts at its upper end providing two flaps in the inlet part of the ice cube bag, the flaps being tied into a knot after filling the ice cube bag with water, the knot providing a hermetical sealing of the interior of the ice cube bag. The cuts in the ice cube bags are made in the cutting station 16 shown in fig. 4. The cutting station 16 is mounted on a support 280 and comprises two sets of vertical rods 282, 284 and 286, 288 which, similar to the rods 132 and 134 on which the cross member 138 supporting the stamping and welding dies is mounted, supports two cross members 290 and 292, respectively. The cross members 290 and 292 are supported through actuating cylinders 294 and 296, respectively, such as pressure air or hydraulic cylinders activated by corresponding pressure air or hydraulic hoses controlled by the central control unit contained in the housing 190.

The actuating cylinders 294 and 296 actuate horizontally movable knives (not shown in fig. 4) which are moved in a downward direction when the ice cube bags 192', 194' and 196' are kept stationary in the stamping and welding operation performed in the stamping and welding station 70 shown in figs. 1 and 2, the knives being moved downwardly and providing cuts in the two adjacent sets of ice cube bags, thus providing the above described flaps which serve as tying-knots when using the ice cube bags, e.g. the ice cube bags 192', 194' and 196' shown in fig. 4.

As will appar from the description the above described production plant, the production plant is provided with mechanical gears and gear exchanges for transferring the continuous rotation of the shaft exiting from the exchange or gear 74 in order to provide an intermittent conveyance of the two two-layer foil webs through the stamping and welding station 14 and a continuous actuation of the cutting device 198 and the conveyor station 20. Alternative embodiments of the production plant may comprise frequency-controlled motors and step motors, which controlled by a central microprocessor provide the intended combined stepwise and continuous transportation or conveyance through the production plant. Thus, it is obvious for a person skilled in the art that the above mentioned mechanical gears may directly be replaced by a motor controlled by a central microprocessor, optionally by means of a number of encoders such as the encoders described above, coupled to the shaft exiting from the exchange or gear 74.

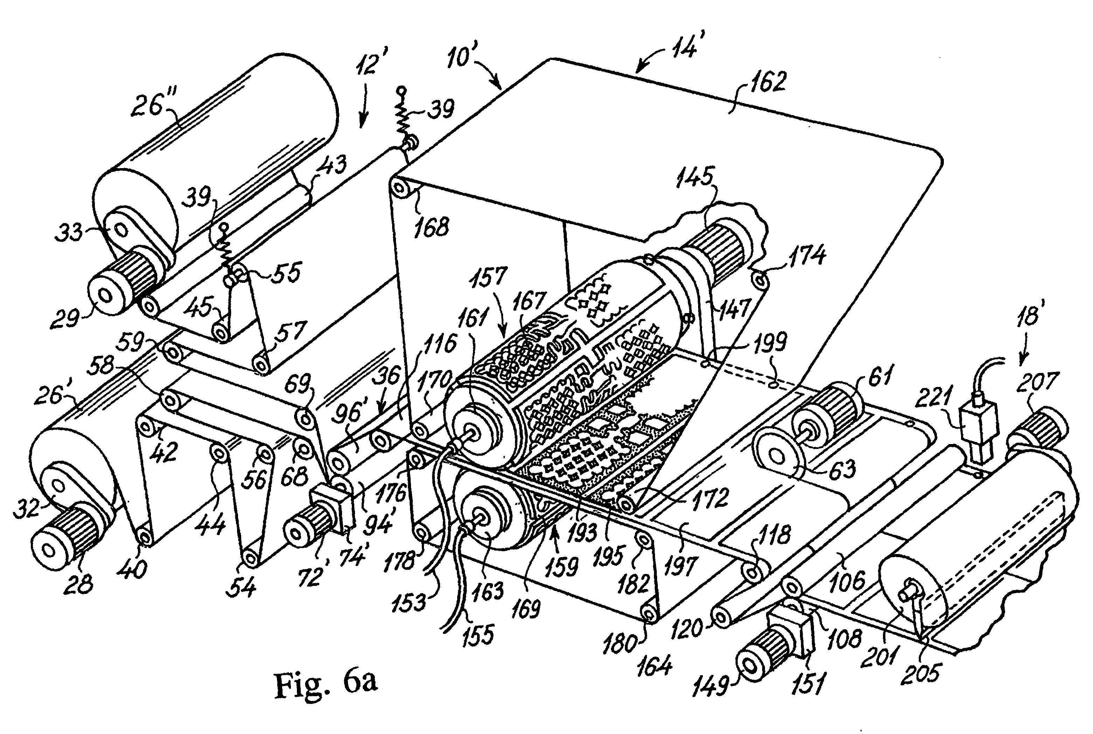

Figs. 6a and 6b, respectively, show a second and third embodiment of the production plant according to the invention, the embodiments differing from the production plant described above with reference to figs. 1-4 in that the ice cube bags or similar welded bags are produced continuously in the production plant shown in figs. 6a and 6b, whereas the stamping and welding operation itself as carried out in the production plant described with reference to figs. 1-5 is performed intermittently as explained above. Furthermore, the production plants shown in figs. 6a and 6b differ from the production plant described above with reference to figs. 1-4 in that the ice cube bags are produced from two separate foils and not from a two-layer foil web as shown in fig. 2, the two-layer foil web being cut and separated prior to the stamping and welding operation. The second embodiment of the production plant according to the invention shown in fig. 6a has been assigned the reference numeral 10' and comprises, similar to the production plant described above with reference to figs. 1-5, a foil unrolling station 12', a stamping and welding station 14' and a cutting and separating station 18' which, though not shown in fig. 6a, cooperates directly with a conveyor station corresponding to the conveyor station shown in figs. 1 and 3.

The foil unrolling station 12' shown in fig. 6a comprises two rolls 26' and 26" containing identical or different single-layer og multi-layer foils, preferably identical thin polyethylene foils. The foils are supplied from the two rolls 26' and 26" by means of a motor 28 and 29, respectively, actuating the rolls 26' and 26" through exchanges or gears 32 and 33, respectively. The foils are supplied continuously from the rolls 26'and 26" as described above with reference to fig. 1, but also at the same rate which approx. corresponds to the conveyance rate of the foils when conveyed through the stamping and welding station 14' at a constant rate. The foil webs supplied from the rolls 26' and 26", respectively, are moved around a number of rollers serving the same purpose as the above mentioned rollers in the foil unrolling station 12, viz. the purpose of neutralizing and compensating possible differences in the unrolling rate of the foils from the rolls 26' and 26" and the conveyance rate of the foils through the stamping and welding station 14'. The lower roll 26' comprises a number of rollers 40, 42, 44, 54, 56, 58 and 68 corresponding to the rollers described above with reference to figs. 1 and 2, and the upper roll 26" comprises a number of rollers 43, 45, 55, 57, 59 and 69 providing a path of conveyance being almost symmetrical to or mirroring that of the lower foil supplied from the roll 26' and conveying the foil web supplied from the roll 26" until it meets the foil web supplied from the roll 26' to provide a two-layer foil web which corresponding to the two-layer foil web described above in fig. 1 has been assigned the reference numeral 26. The two-layer foil web 36 is moved around an actuating roller 94' coupled to a motor 72' through an exchange or gear 74' and constituting the actuating roller at the entrance to the stamping and welding station 14'. The two-layer foil web 36 is moved underneath the actuating roller 94' and then upwardly around a capstan roller 96 pressed against the actuating roller 94', and thereafter the two-layer foil web 36 is moved upwardly around a roller 116 which is identical with the roller at the entrance to the stamping and welding station 14 shown in figs. 1 and 2 and described above with reference to figs. 1 and 2. The exit end of the stamping and welding station 14' is provided with rollers serving the same purpose as the rollers described above with reference to figs. 1 and 2, more particularly the rollers 118 and 120, and an actuating roller 108' corresponding to the actuating roller 94' and cooperating with a capstan roller 106', the rollers being actuated by a motor 149 through an exchange or gear 151.

As indicated above the two-layer foil web 36 is moved through the stamping and welding station 14' at a constant or non-varying rate and not at an intermittent rate as the production plant decribed above with reference to figs. 1-5. Instead of a vertically movable stamping and welding device 70 the stamping and welding station 14' comprises two rotating welding rollers 157 and 159 actuated by the same motor 145 through an exchange or gear 147. On their outer surface the rotating welding rollers 157 and 159 are provided with curved, heated stamping and welding dies. Fig. 6a shows three stamping and welding dies belonging to each of the rotating stamping and welding rollers 157 and 159, the stamping and welding die belonging to the stamping and welding roller 157 having been assigned reference numeral 167, and the corresponding stamping and welding die belonging to the stamping and welding roller 159 having been assigned reference numeral 168. Each of the stamping and welding dies 167 and 169 comprises two stampings corresponding to two finished ice cube bags, the embodiment of the stamping and welding rollers 157 and 159 shown in fig. 6a producing a total of six finished ice cube bags for each rotation of the stamping and welding rollers 157 and 159. Similar to the stamping and welding dies 148 and 150 described above with reference to fig. 2 the stamping and welding dies 167 and 169 are electrically heated and are supplied with electric power through electric wires 159 and 155, respectively, the electric power by means of respective sliding clutches 151 and 153 being transferred to heating units provided in the stamping and welding rollers 157 and 159.

Like the production plant described above with reference to fig. 2 the stamping and welding station 14' shown in fig. 6a is provided with the woven PTFE webs 162 and 164 characteristic for the production plant according to the invention, the PTFE webs forming two opposite closed loops and designed to transfer a uniform stamping and welding pressure from the stamping and welding rollers 157 and 159 to the two-layer foil web 36 sandwiched between the two horizontally extending PTFE webs 162 and 164, but also serving the unique purpose of providing supporting foils, the supporting foils, when pressing down and adhering the PTFE foils to the melted areas of the stamped and welded two-layer foil web, preventing the soft, melted foil material from being stretched when the finished two-layer foil web is drawn out from the stamping and welding station 14' by means of the driving belt 108', essentially as described above with reference to fig. 2.

The stamping and welding of the two-layer foil webs in the continuous stamping and welding operation for the production of ice cube bags performed in the stamping and welding station 14' results in an interconnected web of ice cube bags comprising areas corresponding to individual finished ice cube bags as indicated with reference numerals 193, 195 and 197. As explained above the embodiment of the stamping and welding dies 157 and 159 shown in fig. 6a provides two connected ice cube bags which are consequently cut by means of a rotating knife 63 actuated by a motor 61. This results in two parallel webs of connected ice cube bags which are consequently cut into individual ice cube bags in the cutting and separating station 18'.

The cutting and separating station 18' differs from the cutting and separating station 18 described above with reference to figs. 1-5 in that the cutting device is in the form of a rotatable knife 205 radially movable supported on a rotating roller 201 actuated by a motor 207, the roller 201 rotating at a peripheral speed corresponding to the conveyance rate of the foil web and the radially movable knife 205 moving radially outwards when positioning its edge immediately above and adjacent to a joining between two foil areas to be separated, i.e. the area between two sets of adjacent ice cube bags, and activating it by an electromagnet or a pressure air cylinder. Preferably, an abutment roller (not shown in the drawing) is mounted beneath the rotating roller 201. Unlike in the production plant described above and shown in fig. 3 the cutting device in the cutting and separating station 18' is controlled by detecting the presence of ice cube bags beneath the cutting device, providing optically detectable stampings 199 detected by an optical detector 221 in the cutting and separating station 18' during the stamping and welding of the ice cube bags in the stamping and welding station 14', the optical detector outputting an electric signal through a wire to a central control unit, e.g. the control unit contained in a housing corresponding to the housing 190 shown in fig. 2. As stated, when detecting the stamping 199 the detector 221 generates an electric signal which after a time delay causes the cutting edge 205 to be lowered. Depending on the embodiment of the ice cube bag the special stampings 199 may be replaced by a defined optically detectable area of the bag generating the control signal which after an appropriate time delay activates the actuating cylinders 207 and 209 in order to lower the cutting edge 205 for cutting off the finished ice cube bags from the two webs of interconnected ice cube bags with finished stampings and weldings. Hereafter the individual ice cube bags are transferred to a conveyor station, preferably the conveyor station shown in figs. 1 and 3, and conveyed to an emballing or packing station.

Fig. 6b shows an alternative embodiment of the continuously working production plant shown in fig. 6a, the embodiment comprising a foil supply station 12" and a stamping and welding station 14". The foil supply station 12" differs from the foil supply station 12' described above with reference to fig. 6a in that the foils are supplied directly from the two rolls 26' and 26" actuated by motors corresponding to the motors 28 and 29 decribed above with reference to fig. 6a, and optionally actuated supplementary by weighing elements supporting the rolls 26' and 26". The foils are drawn off the rolls 26' and 26" actuated by an actuating roller 94" driven by the motor 72' through the exchange or gear 74', the actuating roller cooperating with an abutment or capstan roller 96", the foils supplied from rolls 26' and 26", after moving the foil supplied from roll 26" around a roller 69', being compressed between actuating rollers 94' and 94" and conveyed into the stamping and welding station 14" by means of the actuating roller 94".

The stamping and welding station 14" comprises the same units as described above with reference to fig. 6a, but in fig. 6b only the stamping and welding roller 157 is provided with stamping and welding dies 167", whereas the roller 159 is an even, unheated abutment roller. The stamping and welding dies 167" provide continuously connected stampings such as stampings 193', 193" and 193"' being connected both transversally and longitudinally, the stampings 193', 193" and 193"' being directly connected with the stampings provided in a previous stamping and welding step. The unique support of the welded and therefore softened foil areas by means of the pressed down and adhering woven PTFE foil webs 162 and 164 allows the stamping and welding of essentially the entire surface area of the foil webs without edge support or longitudinal support of the foils, and thus an almost 100% utilization of the foil material.

Figs. 7a, 7b, 7c and 7e show alternative embodiments of ice cube bags which may be produced in the production plants shown in figs. 1-5, fig. 6a and 6b. Fig. 7a shows a knot-tying bag corresponding to the knot-tying bag schematically shown in fig. 4 at reference numeral 300. The knot-tying bag 300 is provided with 18 ice cube compartments 310 for the production of a total of 18 ice balls or ice cubes. The ice cube compartments 310 are connected with the exterior by a funnel-shaped inlet opening 302 forming an exterior mouth or opening 304 and defined by two converging weldings 306. Reference numeral 308 indicates a cut for providing the above mentioned tying-knot after filling the interior of the ice cube bag with water.

Figs. 7b, 7c and 7d show three alternative embodiments of selv-closing ice cube bags implemented in correspondance with the techniques described in applicant's above mentioned Danish patent and Danish utility model registration. The ice cube bags have been assigned the overall reference numerals 320, 340 and 360, respectively, and each of them comprises 24 ice cube compartments 330, 350 and 370, respectively. An inlet channel into the interior of the ice cube bags has been assigned reference numerals 322, 342 and 362, respectively, and define outer inlet openings 324, 344 and 364, respectively. In accordance with the above mentioned techniques the inlet channels 322, 342 and 362 are provided with a chamber positioned behind the substantially funnel-shaped inlet opening and defined by welded seams 328, 248 and 368, respectively. The selv-closing compartments characteristic of the selv-closing bag are formed by foil parts which are folded in or turned in as indicated at reference numerals 332, 352 and 372, respectively.

Fig. 7e shows an alternative ice cube bag corresponding to the stamping and welding shown in fig. 6b covering the foil completely. The ice cube bag has been assigned the overall reference numeral 380 and, like the ice cube bags described above with reference to figs. 7b-7d, it is provided with 24 ice cube compartments 390 connected with the exterior by an inlet channel or inlet tube 382 forming an exterior inlet opening 384 and defined by an upper edge welding 386. The inlet tube or inlet channel 382 can partially be separated from the remaining part of the ice cube bag 380 by being separated along a weakened or separating line 388 enabling this part being separated from the major part of the ice cube bag to be closed by tying the inlet tube 382 into a knot in order to dose the interior of the ice cube bag.

### EXAMPLE 1

Selv-closing bags of the type described in applicant's Danish utility model registration no. 92 00011 and Danish patent no. 0,574,496 and comprised by applicant's Danish design application no. 0818 1993 were produced in the production plant described in figs. 1-5. The bags were produced from 16 µm HDPE polyethylene, the production plant shown in figs. 1-5 producing yy bags/hour. The stamping and welding dies used were provided with protrusions corresponding to the weld pattern of the above mentioned self-closing bag shown in the abvoe mentioned Danish design application and were heated to a temperature of 170°C. The high temperature resistant foils 162 and 164 were closed bands of woven PTFE (polytetrafluoroethylene). These production parameters resulted in the production of ice cube bags with a fault frequency of 0%, i.e. there were no faulty ice cube bags such as ice cube bags leaking due to faulty weldings or excessive heating. Thus, this production method has proved to be particularly reliable, allowing the production of ice cube bags at a high rate and with great reliability as well as a 100% utilization of the foil material.

### EXAMPLE 2

Similarly, with the same production parameters and the same yield knot-tying bags corresponding to the above mentioned Danish design registration 0200 1979 were produced in the production plant shown in figs. 1-5.

## Claims

1. A method for producing ice cube bags or similar bags, comprising the following steps:
i) supplying two or more layers of plastic foil (36) superimposed on each other from a plastic foil stock (26; 26', 26"),
ii) joining the plastic foils (36) with at least one web (162, 164) of high temperature resistant material such as PTFE, preferably webs made of woven or non-woven PTFE fibres or PTFE threads, to form a sandwich of said web of high temperature resistant material and said plastic foils,
iii) conveying said sandwich to a stamping or welding station (14; 14', 14") in which said sandwich is subjected to a stamping or welding operation by means of stamping or welding devices (70, 157, 159) applying pressure and heat to the exterior surface of said web (162, 164) of high temperature resistant material in specific areas corresponding to the intended stamped or welded areas of the finished ice cube bag or similar bag, said web (162, 164) of high temperature resistant material serving as a pressure and temperature transmitting web, said application of pressure and heat causing an at least partial melting of the mutually opposite surfaces of the plastic foils (36) in said specific areas and causing said web (162, 164) of high temperature resistant material to be pressed down into and adhere to said plastic foils in said areas,
iv) conveying said sandwich from said stamping and welding station (14; 14', 14"),
v) stripping the adhered web (162, 164) of high temperature resistant material off said plastic foils (36) after cooling said plastic foils (36) to a sufficiently low temperature to prevent them from being deformed during conveyance, and
vi) cutting off a cooled and finished ice cube bag (184, 186, 188; 192, 194,196; 192', 194', 196'; 193; 193', 193", 193"') or similar bag from said cooled plastic foils, **CHARACTERIZED in that** in step iv), said web (162, 164) of high temperature resistant material being kept adhered to said plastic foils (36) for supporting the softened and at least partially melted plastic foils (36) in order to prevent said plastic foils (36) from being stretched during said conveyance.

2. A method according to claim 1, **CHARACTERIZED in that** said sandwich in step iii) is pressed against an abutment (165) during the stamping or welding operation, said stamping or welding devices (70) being pressed against the web (162) of high temperature resistant material from the side of the sandwich opposite the abutment.

3. A method according to claims 1 or 2, **CHARACTERIZED in that** two webs (162, 164) of high temperature resistant material are used in step ii), said plastic foils (36) being inserting between said webs (162, 164) of high temperature resistant material and forming a sandwich with the upper and lower layer consisting of said two webs (162, 164) of high temperature resistant material and the intermediary layer consisting of said plastic foils (36), that said two webs (162, 164) of high temperature resistant material are pressed down into and adhered to opposite sides of said plastic foils (36) in step iii), that said two webs (162,164) of high temperature resistant material are kept adhered to said opposite sides of said plastic foils (36) for supporting the softened and at least partially melted plastic foils from opposite sides of said plastic foils in step iv), and that said two webs (162, 164) of high temperature resistant material are stripped off said plastic foils (36), either concomitantly or consecutively, in step v).

4. A method according to any of claims 1-3, **CHARACTERIZED in that** said method comprises an active cooling (158, 160) of said plastic foils during conveyance of said sandwich from said stamping and welding station (14; 14', 14") and prior to stripping off the webs of high temperature resistant material from the exterior surfaces of said plastic foils.

5. A method according to any of claims 1-4, **CHARACTERIZED in that** the sandwich is conveyed to and from the stamping and welding station (14'; 14") continuously.

6. A method according to claim 5, **CHARACTERIZED in that** said stamping and welding devices in said stamping and welding station comprise one or more rotating stamping and welding rollers.

7. A method according to claim 6, **CHARACTERIZED in that** said stamping and welding devices comprise two opposite and oppositely rotating stamping and welding rollers (157, 159).

8. A method according to claims 1 or 2, **CHARACTERIZED in that** said sandwich is conveyed to and from the stamping and welding station (14) intermittently, said stamping and welding operation being carried out while the sandwich is kept stationary in the stamping and welding station (14).

9. A method according to claim 8, **CHARACTERIZED in that** said stamping and welding devices (70) comprise a vertically movable stamping and welding plunger (142, 146) provided with a stamping and welding die (148, 150) the contours of which correspond to said intended stamped or welded areas of the finished ice cube bag or similar bag.

10. A method according to claim 9, **CHARACTERIZED in that** said stamping and welding devices (70) further comprise a stationary or vertically movable stamping and welding die being provided with contours mirroring the contours of the stamping and welding die of said vertically movable stamping and welding plunger (142, 146).

11. A method according to any of claims 1-10, **CHARACTERIZED in that** said one or more webs (162, 164) of high temperature resistant material form closed loops which are conveyed by the plastic foils (36) during conveyance of the sandwich to and from the stamping and welding station.

12. A method according to any of claims 1-11, **CHARACTERIZED in that** said plastic foils (36) are two plastic foil layers of identical or different polyolefines, preferably identical polyolefines such as polypropylene, polyvinylchloride, polyethylene, preferably LDPE or HDPE.

13. A method according to claim 12, **CHARACTERIZED in that** said two plastic foils (36) comprise turned-in parts for providing closed compartments in self-closing type ice cube bags.

14. A method according to any of claims 1-14, **CHARACTERIZED in that** said plastic foils (36) are homogeneous plastic foils or coextruded multi-layer plastic foils or aluminium surface coated plastic foils.

15. A method according to claim 14, **CHARACTERIZED in that** said plastic foils (36) on their mutually opposite surfaces are surface-coated with a melting material having a lower melting point than the support foil of said plastic foils.

16. A method according to any of claims 1-15, **CHARACTERIZED in that** said stamping and welding devices are heated to a temperature between 150 and 200)C, such as 160 and 190)C, such as 170)C in connection with LDPE foils and approx. 180-190)C in connection with HDPE foils.

17. An ice cube bag (300; 320; 340; 360; 380) or similar bag, **CHARACTERIZED in that** said bag is produced by the method according to any of claims 1-16.

## Patentansprüche

1. Verfahren zur Herstellung von Eiswürfelbeuteln oder ähnlichen Beuteln, welches die folgenden Schritte umfasst:
i) zwei oder mehr Lagen von Kunsttofffolie (36) werden übereinandergelegt von einem Kunststofffolienvorrat (26; 26', 26") zugeführt.
ii) die Kunststofffolien (36) werden mit wenigstens einer Bahn (162, 164) aus hochtemperaturbeständigem Material wie zum Beispiel Teflon, vorzugsweise Bahnen, die aus gewebten oder nichtgewebten Teflon-Fasern oder Teflon-Fäden hergestellt sind, zusammengefügt, um ein Sandwich aus der Bahn aus hochtemperaturbeständigem Material und den Kunststofffolien zu bilden,
iii) das Sandwich wird zu einer Präge- oder Schweissstation (14; 14', 14") befördert, in der das Sandwich einem Präge- oder Schweissvorgang mit Hilfe von Präge- oder Schweisseinrichtungen (70, 157, 159) unterzogen wird, die Druck und Wärme auf die äussere Oberfläche der Bahn (162, 164) aus hochtemperaturbeständigem Material in bestimmten Bereichen anwenden, die zu den gewünschten geprägten oder geschweissten Bereichen des fertiggestellten Eiswürfelbeutels oder ähnlichen Beutels passen, wobei die Bahn (162, 164) aus hochtemperaturbeständigem Material als eine druck- und temperaturübertragende Bahn dient, und wobei die Anwendung von Druck und Wärme bewirkt, dass die einander gegenüberliegenden Oberflächen der Kunststofffolien (36) in den bestimmten Bereichen wenigstens teilweise schmelzen, und bewirkt, dass in diesen Bereichen die Bahn (162, 164) aus hochtemperaturbeständigem Material in die Kunststofffolien hineingedrückt wird und an den Kunststofffolien haftet,
iv) das Sandwich wird von der Präge- und Schweissstation (14; 14', 14") wegbefördert,
v) die anhaftende Bahn (162, 164) aus hochtemperaturbeständigem Material wird nach Abkühlung der Kunststofffolien (36) auf eine ausreichend tiefe Temperatur von den Kunststofffolien (36) abgezogen, um zu verhindern, dass sie während des Beförderns verformt werden kann, und
vi) ein abgekühlter und fertiggestellter Eiswürfelbeutel (184, 186, 188; 192, 194, 196; 192', 194', 196'; 193; 193', 193", 193"') oder ähnlicher Beutel wird von den abgekühlten Kunststofffolien abgeschnitten, **DADURCH GEKENNZEICHNET, dass** in dem Schritt iv) die Bahn (162, 164) aus hochtemperaturbeständigem Material weiter an den Kunststofffolien (36) anhaftend gelassen wird, so dass die weich gemachten und wenigstens teilweise geschmolzenen Kunststofffolien (36) gestützt werden, um zu verhindern, dass die Kunststofffolien (36) während des Beförderns gedehnt werden.

2. Verfahren nach Anspruch 1, **DADURCH GEKENNZEICHNET, dass** in dem Schritt iii) das Sandwich während des Präge- oder Schweissvorgangs gegen ein Widerlager (165) gedrückt wird, und dass die Präge- oder Schweisseinrichtungen (70) von derjenigen Seite des Sandwichs gegen die Bahn (162) aus hochtemperaturbeständigem Material gedrückt werden, die dem Widerlager gegenüberliegt.

3. Verfahren nach Anspruch 1 oder 2, **DADURCH GEKENNZEICHNET, dass** in dem Schritt ii) zwei Bahnen (162, 164) aus hochtemperaturbeständigem Material verwendet werden, wobei die Kunststofffolien (36) zwischen die Bahnen (162, 164) aus hochtemperaturbeständigem Material eingefügt werden und ein Sandwich bilden, bei dem die obere und die untere Lage aus den beiden Bahnen (162, 164) aus hochtemperaturbeständigem Material bestehen und die mittlere Lage aus den Kunststofffolien (36) besteht, dass in dem Schritt iii) die beiden Bahnen (162, 164) aus hochtemperaturbeständigem Material in gegenüberliegende Seiten der Kunststofffolien (36) hineingedrückt werden und an den gegenüberligenden Seiten der Kunststofffolien (36) haften, dass in dem Schritt iv) die beiden Bahnen (162, 164) aus hochtemperaturbeständigem Material weiter an den gegenüberliegenden Seiten der Kunststofffolien (36) anhaftend gelassen werden, so dass die weich gemachten und wenigstens teilweise geschmolzenen Kunststofffolien von gegenüberliegenden Seiten der Kunststofffolien gestützt werden, und dass in dem Schritt v) die beiden Bahnen (162, 164) aus hochtemperaturbeständigem Material entweder gleichzeitig oder nacheinander von den Kunststofffolien (36) abgezogen werden.

4. Verfahren nach einem der Ansprüche 1-3, **DADURCH GEKENNZEICHNET, dass** das Verfahren ein aktives Kühlen (158, 160) der Kunststofffolien während des Beförderns des Sandwichs weg von der Präge- und Schweissstation (14; 14', 14") und vor dem Abziehen der Bahnen aus hochtemperaturbeständigem Material von den äusseren Oberflächen der Kunststofffolien umfasst.

5. Verfahren nach einem der Ansprüche 1-4, **DADURCH GEKENNZEICHNET, dass** das Sandwich kontinuierlich zu der Präge- und Schweissstation (14'; 14") hin und von dieser weg befördert wird.

6. Verfahren nach Anspruch 5, **DADURCH GEKENNZEICHNET, dass** die Präge- und Schweisseinrichtungen in der Präge- und Schweissstation eine oder mehrere rotierende Präge- und Schweisswalzen aufweisen.

7. Verfahren nach Anspruch 6, **DADURCH GEKENNZEICHNET, dass** die Präge- und Schweisseinrichtungen zwei gegenüberliegende und gegensinnig rotierende Präge- und Schweisswalzen (157, 159) aufweisen.

8. Verfahren nach Anspruch 1 oder 2, **DADURCH GEKENNZEICHNET, dass** das Sandwich schrittweise zu der Präge- und Schweissstation (14) hin und von dieser weg befördert wird, und dass der Präge- und Schweissvorgang durchgeführt wird, während das Sandwich in der Präge- und Schweissstation (14) stationär gehalten wird.

9. Verfahren nach Anspruch 8, **DADURCH GEKENNZEICHNET, dass** die Präge- und Schweisseinrichtungen (70) einen senkrecht bewegbaren Präge- und Schweissplunger (142, 146) umfassen, der mit einem Präge- und Schweissstempel (148, 150) versehen ist, dessen Konturen zu den gewünschten geprägten oder geschweissten Bereichen des fertiggestellten Eiswürfelbeutels oder ähnlichen Beutels passen.

10. Verfahren nach Anspruch 9, **DADURCH GEKENNZEICHNET, dass** die Präge- und Schweisseinrichtungen (70) zudem einen stationären oder senkrecht bewegbaren Präge- und Schweissstempel aufweisen, die mit Konturen versehen ist, die die Konturen des Präge- und Schweissstempels des senkrecht bewegbaren Präge- und Schweissplungers (142,148) widerspiegeln.

11. Verfahren nach einem der Ansprüche 1-10, **DADURCH GEKENNZEICHNET, dass** die eine oder mehrere Bahnen (162, 164) aus hochtemperaturbeständigem Material geschlossene Schleifen bilden, die während des Beförderns des Sandwichs zu der Präge- und Schweissstation hin und von dieser weg von den Kunststofffolien befördert werden.

12. Verfahren nach einem der Ansprüche 1-11, **DADURCH GEKENNZEICHNET, dass** die Kunststofffolien (36) zwei Kunststofffolienlagen aus identischen oder underschiedlichen Polyolefinen sind, vorzugsweise identischen Polyolefinen, wie zum Beispiel Polypropylen, Polyvinylchlorid, Polyethylen, vorzugsweise LDPE oder HDPE.

13. Verfahren nach Anspruch 12, **DADURCH GEKENNZEICHNET, dass** die beiden Kunststofffolien (36) nach innen gedrehte Teile aufweisen, um geschlossene Abteile in Eiswürfelbeuteln des selbstverschliessenden Typs zu schaffen.

14. Verfahren nach einem der Ansprüche 1-14, **DADURCH GEKENNZEICHNET, dass** die Kunststofffolien (36) homogene Kunststofffolien oder koextrudierte mehrschichtige Kunststofffolien oder mit Aluminium oberflächenbeschichtete Kunststofffolien sind.

15. Verfahren nach Anspruche 14, **DADURCH GEKENNZEICHNET, dass** die Kunststofffolien (36) auf ihren einander gegenüberliegenden Oberflächen mit einem Schmelzmaterial oberflächenbeschichtet sind, das einen niedrigeren Schmelzpunkt aufweist als die Stützfolie der Kunststofffolien.

16. Verfahren nach einem der Ansprüche 1-15, **DADURCH GEKENNZEICHNET, dass** die Präge- und Schweisseinrichtungen auf eine Temperatur zwischen 150 und 200°C, wie zum Beispiel 160 und 190°C, wie zum Beispiel 170°C in Verbindung mit LDPE-Folien und ungefähr 180-190°C in Verbindung mit HDPE-Folien erwärmt werden.

17. Eiswürfelbeutel (300; 320; 340; 360; 380) oder ähnlicher Beutel, **DADURCH GEKENNZEICHNET, dass** der Beutel gemäss des Verfahrens nach einem der Ansprüche 1-16 hergestellt ist.

## Revendications

1. Procédé pour la fabrication de poches à glaçons ou poches similaires, **caractérisé en ce qu'**il consiste:
i) à délivrer deux ou plusieurs couches de feuille plastique (36), superposées l'une sur l'autre, à partir d'une réserve de feuilles plastiques (26; 26', 26"),
ii) à assembler les feuilles de plastique (36) avec au moins une bande (162, 164) d'un matériau résistant à haute température tel que du Téflon, les bandes étant de préférence faites de fibres ou de fils de Téflon tissés ou non tissés, pour former un sandwich de ladite bande de matériau résistant à haute température et desdites feuilles de plastique,
iii) à amener ledit sandwich à un poste d'estampage ou de soudage (14; 14', 14") dans lequel ledit sandwich est soumis à une opération d'estampage ou de soudage au moyen de dispositifs d'estampage ou de soudage (70, 157, 159) par application d'une pression et de chaleur sur la surface extérieure de ladite bande (162, 164) de matériau résistant à haute température dans des zones particulières correspondant aux zones destinées à l'estampage et au soudage de la poche à glaçons finie ou de la poche similaire, ladite bande (162, 164) de matériau résistant à haute température servant de bande de transmission de la pression et de la température, et ladite application de pression et de chaleur provoquant une fusion au moins partielle des surfaces mutuellement opposées des feuilles de plastique (36) dans lesdites zones particulières et conduisant ladite bande (162, 164) à être abaisée dans lesdites feuilles de plastique et à adhérer à celles-ci dans lesdites zones,
iv) à transporter ledit sandwich dudit poste d'estampage et de soudage (14; 14', 14"),
v) à détacher la bande adhérente (162, 164) de matériau résistant à haute température desdites feuilles de plastique (36) après refroidissement desdites feuilles de plastique (36) à une température suffisamment basse pour leur éviter d'être déformées durant le transport, et
vi) à découper une poche à glaçons finie et refroidie (184, 186, 188; 192, 194, 196; 192', 194', 196', 193; 193', 193", 193"') ou une poche similaire dans lesdites feuilles de plastique refroidies, **CARACTÉRISÉ en ce que** dans l'étape iv), ladite bande (162, 164) du matériau résistant à haute température étant gardée en adhérence sur lesdites feuilles de plastique (36) pour soutenir les feuilles de plastique (36) ramollies et fondues au moins partiellement de manière à éviter que les dites feuilles de plastique (36) ne soient étirées durant ledit transport.

2. Procédé selon la revendication 1, **CARACTÉRISÉ en ce que**, dans l'étape iii), ledit sandwich est pressé contre une butée (165) pendant l'opération d'estampage ou de soudage, lesdits dispositifs d'estampage ou de soudage (70) étant pressés contre la bande (162) de matériau résistant à haute température à partir du côté du sandwich opposé à la butée.

3. Procédé selon les revendications 1 à 2, **CARACTÉRISÉ en ce que**. dans l'étape ii), deux bandes (162,164) de matériau résistant à haute température sont utilisées, lesdites feuilles de plastique (36) étant insérées entre lesdites bandes (162, 164) de matériau et formant un sandwich dont la couche supérieure et la couche inférieure sont constituées desdites deux bandes (162, 164) de matériau résistant à haute température et la couche intermédiaire est constituée des feuilles de plastique (36), **en ce que**, dans l'étape iii), lesdites deux bandes (162, 164) de matériau résistant à haute température sont enfoncées et adhérent aux faces opposées desdites feuilles de plastique (36), **en ce que**, dans l'étape iv), lesdites deux bandes de matériau (162, 164) résistant à haute température sont maintenues en adhérence sur lesdites faces opposées desdites feuilles de plastique (36) pour soutenir les feuilles de plastique ramollies et fondues au moins partiellement à partir des faces opposées desdites feuilles de plastique, **en ce que**, dans l'étape v), lesdites deux bandes (162, 164) de matériau résistant à haute température sont détachées desdites feuilles de plastique (36), de manière concomitante ou consécutive.

4. Procédé selon l'une quelconque des revendications 1 à 3, **CARACTÉRISÉ en ce que** ledit procédé comprend un refroidissement actif (158, 160) desdites feuilles de plastique pendant le transport dudit sandwich à partir du poste d'estampage et de soudage (14; 14', 14") et avant l'enlèvement des bandes de matériau résistant à haute température des surfaces externes desdites feuilles de plastique.

5. Procédé selon l'une quelconque des revendications 1 à 4, **CARACTÉRISÉ en ce que** le sandwich est transporté vers et à partir du poste d'estampage et de soudage (14'; 14") de manière continue.

6. Procédé selon la revendication 5, **CARACTÉRISÉ en ce que** lesdits dispositifs d'estampage et de soudage dans ledit poste d'estampage et de soudage comprennent un ou plusieurs rouleaux d'estampage et de soudage rotatifs.

7. Procédé selon la revendication 6, **CARACTÉRISÉ en ce que** lesdits dispositifs d'estampage et de soudage comprennent deux rouleaux d'estampage et de soudage opposés et en rotation contraire (157, 159).

8. Procédé selon la revendication 1 ou 2, **CARACTÉRISÉ en ce que** ledit sandwich est transporté vers et à partir du poste d'estampage et de soudage (14) de manière intermittente, ladite opération d'estampage et de soudage étant effectuée alors que le sandwich est maintenu stationnaire dans le poste d'estampage et de soudage (14).

9. Procédé selon la revendication 8, **CARACTÉRISÉ en ce que** lesdits dispositifs d'estampage et de soudage (70) comprennent un piston d'estampage et de soudage mobile verticalement (142, 146), muni d'une matrice d'estampage et de soudage (148, 150) dont les contours correspondent aux dites zones destinées à l'estampage et au soudage de la poche à glaçons finie ou de la poche similaire.

10. Procédé selon la revendication 9, **CARACTÉRISÉ en ce que** lesdits dispositifs d'estampage et de soudage (70) comprennent en outre une matrice d'estampage et de soudage, fixe ou mobile verticalement, munie de contours reproduisant en miroir les contours de la matrice d'estampage et de soudage dudit piston d'estampage et de soudage mobile verticalement (142,146).

11. Procédé selon l'une quelconque des revendications 1 à 10, **CARACTÉRISÉ en ce que** ladite ou lesdites bande(s) (162, 164) de matériau résistant à haute température forment des boucles fermées qui sont entraînées par les feuilles de plastique (36) pendant le transport du sandwich vers et à partir du poste d'estampage et de soudage.

12. Procédé selon l'une quelconque des revendications 1 à 11, **CARACTÉRISÉ en ce que** lesdites feuilles de plastique (36) sont constituées de deux couches de feuille plastique de polyoléfines identiques ou différentes, de préférence des polyoléfines identiques telles que du polypropylène, du polychlorure de vinyle, du polyéthylène, de préférence LDPE (polyéthylène basse densité) ou HDPE (polyéthylène haute densité).

13. Procédé selon la revendication 12, **CARACTÉRISÉ en ce que** lesdites deux feuilles de plastique (36) comprennent des parties rabattues destinées à former des compartiments clos dans les poches à glaçons du type à fermeture automatique.

14. Procédé selon l'une quelconque des revendications 1 à 13, **CARACTÉRISÉ en ce que** lesdites feuilles de plastique (36) sont des feuilles de plastique homogène ou des feuilles de plastique multi-couches co-extrudées ou des feuilles de plastique avec un revêtement de surface en aluminium.

15. Procédé selon la revendication 14, **CARACTÉRISÉ en ce que** les surfaces mutuellement opposées desdites feuilles de plastique (36) sont revêtues d'un matériau de fusion ayant un point de fusion inférieur à celui de la feuille de support desdites feuilles de plastique.

16. Procédé selon l'une quelconque des revendications 1 à 15, **CARACTÉRISÉ en ce que** lesdits dispositifs d'estampage et de soudage sont chauffés à une température comprise entre 150 et 200°C, telle que 160 et 190°C, telle que 170°C en relation avec des feuilles de LDPE et de 180 à 190°C approximativement en relation avec des feuilles de HDPE.

17. Poche à glaçons (300; 320; 340; 360; 380) ou poche similaire, **CARACTERISÉ en ce que** ladite poche est obtenue avec le procédé selon l'une quelconque des revendications 1 à 16.
